# EUROPÄISCHE PATENTSCHRIFT

(11) **EP 0 853 984 B1**
(45) Veröffentlichungstag und Bekanntmachung des Hinweises auf die Patenterteilung: **10.04.2002**
(21) Anmeldenummer: 97810982.5
(22) Anmeldetag: 15.12.1997
(51) Int. Cl.: B07C 3/02

(54) **Vorrichtung und Verfahren zum Überführen von Sortiergutstücken in eine geordnete Reihe**
Device and method for transferring articles to be sorted to an ordered row
Dispositif et procédé de transfert d'articles à trier en une rangée ordonnée

(30) Priorität: 19.12.1996 CH 311796
(43) Veröffentlichungstag der Anmeldung: 22.07.1998
(73) Patentinhaber: SIEMENS AKTIENGESELLSCHAFT, 80333 München (DE)
(72) Erfinder: Maier, Wilhelm, 5430 Wettingen (CH); Oppliger, Jean-Claude, 8155 Niederhasli (CH)
(74) Vertreter: Fischer, Michael, Dr.

(56) Entgegenhaltungen:
- EP-A- 0 072 310
- EP-A- 0 613 730
- EP-A- 0 697 260
- DE-A- 2 742 802

## Beschreibung

Die Erfindung betrifft eine Vorrichtung zum Überführen von Adressen aufweisenden Sortiergutstücken in eine entsprechend einer vorgegebenen Reihenfolge möglicher Adressen geordnete Reihe, ausgehend von mindestens zwei Teilreihen, in denen die Sortiergutstücke gemäß der vorgegebenen Reihenfolge geordnet sind, ein damit ausführbares Verfahren sowie die Verwendung einer derartigen Vorrichtung zum Sortieren von Adressen in Form von Versandadressen aufweisenden Versandstücken.

Versandstücke werden zur Zustellung üblicherweise in für jeweils einen Postbezirk zuständigen Postämtern nach einzelnen Zustellbezirken des Postbezirkes geordnet, in denen sie dann von jeweils einem für diesen Zustellbezirk zuständigen Postboten zugestellt werden. Zur Beschleunigung der Zustellung ist es üblich, daß der jeweilige Postbote die in seinem Zustellbezirk zuzustellenden Versandstücke anhand ihrer Versandadressen zunächst entsprechend dem Verlauf der von ihm zur Zustellung zurückzulegenden Wegstrecke sortiert. Dazu werden die einzelnen Versandstücke gemäß der Reihenfolge der Zustelladressen längs dieser Wegstrecke geordnet.

Dieser vor der eigentlichen Zustellung der Versandstücke auszuführende Arbeitsgang ist sehr zeit- und daher kostenaufwendig. Aus diesem Grund sind einige Postbehörden dazu übergegangen, Großkunden, wie etwa Versendern von Zeitungen, Zeitschriften, Katalogen oder dgl., Sondertarife einzuräumen, wenn sie ihre Versandstücke bereits in einer entsprechend der von den zuständigen Postboten zur Zustellung zurückzulegenden Wegstrecke vorsortierten Form bei der Post aufgeben, um so den oben erläuterten, vor der eigentlichen Zustellung von den Postboten durchzuführenden Arbeitsgang zu erleichtern und zu beschleunigen.

Es hat sich jedoch gezeigt, daß keine wesentliche Beschleunigung der von den Postboten vorzunehmenden Sortierung erreicht werden kann, wenn zwei oder mehr bereits vorsortierte Versandstückstapel bei dem Sortiervorgang zu berücksichtigen sind.

Angesichts dieses Problems liegt der Erfindung die Aufgabe zugrunde, eine Vorrichtung bereitzustellen, mit der die Bearbeitung mehrerer bereits vorsortierter, beispielsweise stapelförmig angelieferter Teilreihen von Sortiergutstücken, insbesondere Versandstücken, beschleunigt werden kann, sowie ein damit ausführbares Verfahren anzugeben.

In der europäischen Patentanmeldung EP-A-0 613 730 wird eine Vorrichtung zum Überführen von Adressen aufweisenden Sortiergutstücken, ausgehend von mindestens zwei Teilreihen, die für eine Sortierung bestimmt sind, mit einer der Anzahl der Teilreihen entsprechenden Anzahl von Transportreihen, die zum sequenziellen Übergeben der Sortiergutstücke vorgesehen sind, die aus jeweils hintereinander geschalteten Transporteinheiten bestehen und die zur Übergabe der Sortiergutstücke von einer Transportreihe zu einer benachbarten Transportreihe mindestens eine betätigbare bewegbare Wähleinrichtung aufweisen, mit deren Hilfe die Sortiergutstücke sowohl von einer Transportreihe zur nächsten als auch zur vorgesehenen Zielstelle befördert werden können.

Die genannte Vorrichtung ist für die Lösung der Aufgabe zu komplex und kostenintensiv.

In der europäischen Patentanmeldung EP-A1-0 834 354 wird eine Vorrichtung zur Sortierung entsprechend der Adresse der Sortiergutstücke von mindestens zwei bereits vorsortierten Versandstückstapeln zu einem Versandstückstapel beschrieben, die sich durch ihren einfacheren und kostengünstigeren Aufbau auszeichnet.

Sollen aber mehrere vorsortierte Versandstückstapel nach vorweg genannten Kriterien sortiert werden, so vergrössert sich der Platzbedarf der Vorrichtung beachtlich.

Der vorliegenden Erfindung liegt daher weiter die Aufgabe zugrunde, ausgehend vom Stand der Technik, eine kompakte, platzsparende Vorrichtung zu erzielen.

In vorrichtungsmässiger Hinsicht werden die vorgenannten Aufgaben durch eine Vorrichtung zum Überführen von Adressen aufweisenden Sortiergutstücken in eine entsprechend einer vorgegebenen Reihenfolge möglicher Adressen geordnete Reihe, ausgehend von mindesten zwei Teilreihe, in denen die Sortiergutstücke gemäss der vorgegebenen Reihenfolge geordnet sind gelöst, die dadurch gekennzeichnet ist, dass entsprechend der Anzahl der Teilreihen
- je eine Zuführeinrichtung zur Zuführung der Sortiergutstücke der jeweiligen Teilreihe,
- je eine die Adressen der zu übergebenden Sortiergutstücke erfassende Einrichtung,
- eine betätigbare, um eine feste Achse drehbare Wähleinrichtung,
- je eine betätigbare Übergabeeinrichtung, die zusammen längs eines Kreises um die feste Achse der Wähleinrichtung angeordnet sind, zum sequentiellen Übergeben der Sortiergutstücke von der jeweiligen Zuführeinrichtung an die Wähleinrichtung und
- eine allen Sortiergutstücken gemeinsame Abgabestelle
vorgesehen sind.

Mit der erfindungsgemäßen Vorrichtung wird durch die Übernahme und Abgabe der Sortiergutstücke aller Teilreihen mit der Wähleinrichtung an der Abgabestelle eine einzige, aus den Sortiergutstücken aller zugeführten Teilreihen bestehende Sortiergutstückreihe gebildet. Zur Steuerung der Wähleinrichtung erfaßt die Steuereinrichtung der erfindungsgemäßen Vorrichtung die Adressen der zu übergebenden Sortiergutstücke. Daher kann mit der Steuereinrichtung zu jedem Zeitpunkt während des Betriebs der erfindungsgemäßen Vorrichtung ermittelt werden, welches der noch zu übergebenden Sortiergutstücke der einzelnen Teilreihen zur Erzeugung der gemäß der vorgegebenen Reihenfolge geordneten Reihe an der Abgabestelle als nächstes von der entsprechenden Übergabeeinrichtung zu übergeben ist, und die Wähleinrichtung entsprechend betätigen. Dabei reicht es unter Ausnutzung der Tatsache, daß die Sortiergutstücke der zugeführten Teilreihen bereits entsprechend der vorgegebenen Reihenfolge geordnet sind und die Übergabeeinrichtungen zum sequentiellen Übergeben der vorsortierten Versandstücke ausgelegt sind, aus, wenn zur Bestimmung des als nächstes zu übergebenden Versandstücks von jeder Teilreihe nur die Adresse des mit der entsprechenden Übergabeeinrichtung als nächstes übergebbaren Sortiergutstückes berücksichtigt wird. Auf diese Weise kann das vorstehend geschilderte Problem im Stand der Technik unter Verwendung einer konstruktiv einfachen Vorrichtung mit geringem Steueraufwand gelöst werden.

Zur selektiven Übernahme und Abgabe der Sortiergutstücke der einzelnen Teilreihen ist die Wähleinrichtung zweckmäßigerweise zwischen Übernahmestellungen, in denen sie zur Übernahme von Sortiergutstücken von jeweils einer der Übergabeeinrichtungen betätigbar ist, und einer zum Abgeben der übernommenen Sortiergutstücke an der gemeinsamen Abgabestelle dienenden Abgabestellung bewegbar. Dabei kann eine der Übernahmestellungen der Abgabestellung entsprechen, wenn die Sortiergutstücke an einer Seite der Wähleinrichtung übernommen und an der anderen Seite davon abgegeben werden.

Ein besonders kompakter Aufbau der erfindungsgemäßen Vorrichtung kann erreicht werden, wenn die Wähleinrichtung zur Ausführung der Bewegung zwischen den einzelnen Übernahmestellungen und der Abgabestellung um eine feste Achse drehbar ist. Die Übergabeeinrichtungen können dann längs eines Kreises um diese feste Achse angeordnet sein.

Zur sicheren und zuverlässigen Überführung der Sortiergutstücke von den Übergabeeinrichtungen zur Abgabestelle weist die Wähleinrichtung zweckmäßigerweise ein zum Transportieren der Sortiergutstücke von den Übergabeeinrichtungen zur Abgabestelle betätigbares Förderelement auf. Aus dem gleichen Grund ist es ferner bevorzugt, wenn auch mindestens eine der Übergabeeinrichtungen ein zum sequentiellen Übergeben der Sortiergutstücke an die Wähleinrichtung betätigbares Förderelement aufweist. Schließlich kann die Zuverlässigkeit des mit der erfindungsgemäßen Vorrichtung durchführbaren Sortiervorganges weiter erhöht werden, wenn an der Abgabestelle ein zum Abtransport der dort abgegebenen Sortiergutstücke betätigbares Förderelement angeordnet ist.

Die einzelnen Förderelemente weisen vorteilhafterweise zwei parallel zueinander verlaufende, zum Transportieren der Sortiergutstücke dazwischen betreibbare Förderbänder auf. Dadurch kann die Bearbeitungsgeschwindigkeit mit der erfindungsgemäßen Vorrichtung erhöht werden, weil ein ansonsten bei einer erhöhten Fördergeschwindigkeit zu befürchtendes und einen kontrollierten Förderbetrieb beeinträchtigendes Ablösen der Sortiergutstücke von den Förderelementen durch Anordnen der Sortiergutstücke zwischen den Förderbändern sicher ausgeschlossen werden kann.

Die Variabilität einer mit Förderelementen in Form von zwei parallel zueinander verlaufenden Förderbändern ausgestatteten Vorrichtung kann erhöht werden, wenn mindestens eines der Förderbänder mindestens eines der Förderelemente gegen die Wirkung einer Vorspannkraft senkrecht zu seiner Förderrichtung verschiebbar ist, weil dadurch der sichere Transport von Sortiergutstücken unterschiedlicher Dicke mit ein und derselben Fördereinrichtung ermöglicht wird.

Falls die erfindungsgemäße Vorrichtung zum Überführen von Sortiergutstücken in Form von mit Adressen in Form von Versandadressen versehenen Versandstücken in eine geordnete Reihe verwendet wird, hat es sich als besonders vorteilhaft erwiesen, wenn die Versandstücke der dann üblicherweise in Form von Versandstückstapeln zugeführten Teilreihen im wesentlichen aufrecht stehen, d. h. wenn ihre Hauptflächen in Vertikalebenen angeordnet sind. Zum Verarbeiten derartig zugeführter Versandstücke ist es erfindungsgemäß besonders bevorzugt, wenn auch die Hauptflächen der zur Bildung der Förderelemente verwendeten Förderbänder im wesentlichen in Vertikalebenen angeordnet sind.

Wenn die Teilreihen in Form von entsprechend der vorgegebenen Reihenfolge geordneten Sortiergutstückstapeln zugeführt werden, ist es zweckmäßig, wenn mindestens einer der Übergabeeinrichtungen eine Zuführeinrichtung zugeordnet ist, mit der die Sortiergutstücke nacheinander von dem Sortiergutstückstapel abgezogen und der Übergabeeinrichtung zugeführt werden.

Zum Erfassen der Adressen der Sortiergutstücke ist daran gedacht, daß mindestens einer der Übergabeeinrichtungen eine Leseeinrichtung zum automatischen Lesen der Adressen der davon zu übergebenden Sortiergutstücke zugeordnet ist.

Bei Verwendung der oben beschriebenen Zuführeinrichtungen hat es sich als zweckmäßig erwiesen, wenn die Leseeinrichtung zwischen der Zuführeinrichtung und der Übergabeeinrichtung angeordnet ist. Dann können die Adressen während der Zuführung der Sortiergutstücke zur Übergabeeinrichtung erfaßt und an die Steuereinrichtung weitergegeben werden.

Wenn die Steuereinrichtung auch noch zum Vergleichen der Reihenfolge der mit der einer der Übergabeeinrichtungen zugeordneten Leseeinrichtung gelesenen Adressen mit der vorgegebenen Reihenfolge betreibbar ist, kann mit der erfindungsgemäßen Vorrichtung vor der Erstellung der geordneten Reihe auch noch die Richtigkeit der Reihenfolge der Sortiergutstücke der entsprechenden Teilreihe überprüft werden. Zur Erleichterung der weiteren Bearbeitung der mit der erfindungsgemäßen Vorrichtung in eine geordnete Reihe überführten Sortiergutstücke ist es besonders vorteilhaft, wenn die Wähleinrichtung zum Abgeben der übernommenen Sortiergutstücke aller Teilreihen mit in dieselbe Richtung weisenden Adressen betreibbar ist.

Wie aus der vorstehenden Erläuterung hervorgeht, ist die erfindungsgemäße Vorrichtung zum Ausführen eines Verfahrens zum Überführen von Adressen aufweisenden Sortiergutstücken in eine entsprechend einer vorgegebenen Reihenfolge möglicher Adressen geordnete Reihe betreibbar,
dass gekennzeichnet ist durch die folgenden Verfahrensschritte:
A: die Sortiergutstücke der jeweiligen Teilreihe werden einzeln von einer der Anzahl der Teilreihen entsprechender Anzahl von Zuführeinrichtungen aufgenommen und in Richtung einer der Anzahl der Teilreihen entsprechenden Anzahl betätigbaren Übergabeeinrichtungen transportiert;
B: die Adressen der zu übergebenden Sortiergutstücke werden von einer der Anzahl der Teilreihen entsprechenden Anzahl von Leseeinrichtung erfasst;
C: die Reihenfolge der Adressen der mit einer der Übergabeeinrichtung zu übergebenden Sortiergutstücke wird vor Übergabe an eine Wähleinrichtung mit der vorgegebenen Reihenfolge verglichen;
D: die Wähleinrichtung wird in Abhängigkeit von den Adressen der zu übergebenden Sortiergutstücke zur Übergabe und Abgabe der Sortiergutstücke aller Teilreihen gemäss der vorgegebenen Reihenfolge gesteuert und dabei an die Übergabeeinrichtung bewegt, von der das nächste Sortiergutstück abgegeben werden soll.
E: das Sortiergutstück wird von der, gemäss von der Steuerung ermittelten Übergabeeinrichtung an die Wähleinrichtung übergeben;
F: die Wähleinrichtung wird entsprechend zur Abgabe des Sortiergutstückes an die Abgabestelle gesteuert.

Bei der Ausführung eines derartigen Verfahrens kann die Einhaltung der vorgegebenen Reihenfolge in der zu bildenden geordneten Reihe besonders zuverlässig sichergestellt werden, wenn die Wähleinrichtung nur dann zur Übernahme eines Sortiergutstücks angesteuert wird, wenn in jeder Sortiergutstücke übergebenden Übergabeeinrichtung ein Sortiergutstück zur Übergabe daran bereitsteht.

Die vorstehend angesprochene Überprüfung der Reihenfolge der Sortiergutstücke in den zugeführten Teilreihen kann mit dem erfindungsgemäßen Verfahren verwirklicht werden, wenn die Reihenfolge der Adressen der mit einer der Übergabeeinrichtungen zu übergebenden Sortiergutstücke vor der Übergabe an die Wähleinrichtung mit der vorgegebenen Reihenfolge verglichen wird.

Nachstehend wird die Erfindung unter Bezugnahme auf die Zeichnung, auf die hinsichtlich aller erfindungswesentlichen und in der Beschreibung nicht weiter herausgestellten Einzelheiten ausdrücklich verwiesen wird, erläutert. In der Zeichnung zeigen:
- Fig. 1: eine Draufsicht auf eine Vorrichtung gemäß einer ersten Ausführungsform der Erfindung und
- Fig. 2: eine Draufsicht auf eine Vorrichtung gemäß einer zweiten Ausführungsform der Erfindung.

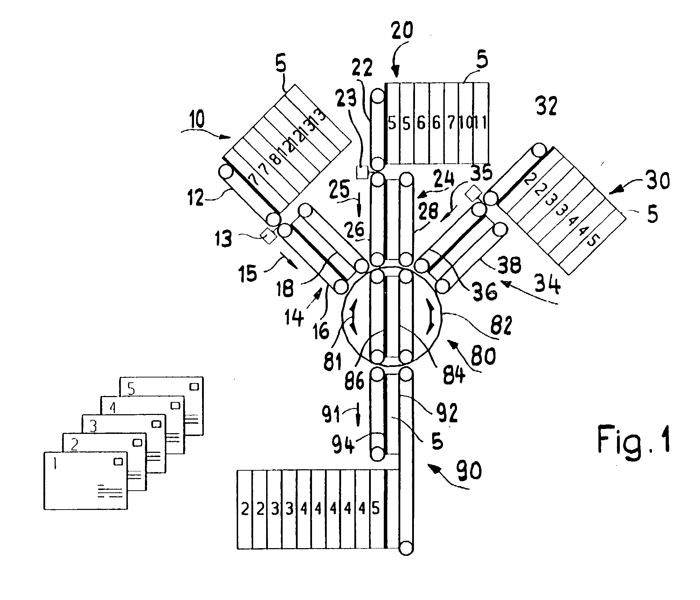

Die in Fig. 1 dargestellte Vorrichtung ist zum Überführen von drei in Form von Versandstückstapeln 10, 20 und 30 zugeführten Teilreihen, in denen die Versandstücke 5 gemäß einer vorgegebenen Reihenfolge möglicher Adressen geordnet sind, in eine entsprechend der vorgegebenen Reihenfolge geordnete Reihe ausgelegt. Dazu ist für jeden der zugeführten Versandstückstapel 10, 20, 30 eine Zuführeinrichtung 12, 22 bzw. 32 in Form eines endlos umlaufenden Förderbandes vorgesehen, mit der die Versandstücke des jeweiligen Versandstückstapels nacheinander von dem Versandstückstapel abgezogen und einer dafür vorgesehenen Übergabeeinrichtung 14, 24 bzw. 34 zugeführt werden können. Da die Versandstücke 5 der einzelnen Versandstückstapel so angeordnet sind, daß ihre Hauptflächen in Vertikalebenen liegen, sind die Hauptflächen der die Zuführeinrichtungen bildenden Förderbänder 12, 22 bzw. 32 ebenfalls in Vertikalebenen angeordnet.

Zwischen den Zuführeinrichtungen 12, 22 und 32 und den entsprechenden Übergabeeinrichtungen 14, 24 bzw. 34 sind Leseeinrichtungen 13, 23 bzw. 33 zum Lesen von beispielsweise in Form von Bar-Kodes auf die einzelnen Versandstücke aufgedruckten Versandadressen und zum Weiterleiten der so gelesenen Versandadressen an eine Steuereinrichtung (nicht dargestellt) angeordnet.

Die Übergabeeinrichtungen 14, 24 und 34 weisen jeweils zwei parallel zueinander verlaufende Förderbänder 16 und 18, 26 und 28 bzw. 36 und 38 auf, zwischen denen die daran übergebenen Versandstücke 5 in durch die Pfeile 15, 25 bzw. 35 angegebenen Richtungen zur Übernahme von einer Wähleinrichtung 80 transportierbar sind. Die Förderbänder 16 und 18, 26 und 28 bzw. 36 und 38 der einzelnen Übergabeeinrichtungen 14, 24 und 34 sind senkrecht zu der jeweiligen durch die Pfeile 15, 25 bzw. 35 angedeuteten Transportrichtung gegen die Wirkung einer Vorspannkraft gegeneinander verschiebbar, um so die Aufnahme und den Transport von Versandstücken unterschiedlicher Dicke dazwischen zu ermöglichen.

Die Wähleinrichtung 80 weist eine etwa kreisförmige Drehbühne 82 auf, die in den durch den Doppelpfeil 81 angegebenen Richtungen um eine senkrecht dazu durch das Zentrum davon verlaufende, raumfeste Achse drehbar ist. Auf der Drehbühne 82 ist ein damit drehbares Förderelement in Form von zwei parallel zueinander endlos umlaufenden Förderbändern 84 und 86 angeordnet, zwischen denen die von den Übergabeeinrichtungen 14, 24 und 34 zu übergebenden Versandstücke übernommen und zur Abgabe an eine Abtransporteinrichtung 90 transportiert werden können. Auch die Förderbänder 84 und 86 sind zur Ermöglichung der Übernahme von Versandstücken unterschiedlicher Dicke dazwischen in einer senkrecht zu ihrer Transportrichtung verlaufenden Richtung gegen die Wirkung einer Vorspannkraft gegeneinander verschiebbar. Bezüglich des konstruktiven Aufbaus der Drehbühne mit den darauf angeordneten Förderbändern wird auf die EP 0 613 730 A2 verwiesen. Die Übergabeeinrichtungen 14, 24 und 34 sind längs einer koaxial zur Drehbühne 82 verlaufenden Kreislinie angeordnet, wobei sich die Förderwege der von den Versandstückstapeln 10, 20 und 30 abgezogenen und dazwischen zu transportierenden Versandstücke in radialen Richtungen bezüglich der durch das Zentrum der Drehbühne 82 verlaufenden festen Drehachse erstrecken. Auf diese Weise wird erreicht, daß im Bereich der an den der Drehbühne 82 abgewandten Enden der Übergabeeinrichtungen 14, 24 bzw. 34 angeordneten Zuführeinrichtungen 12, 22 und 32 genügend Raum für die Unterbringung der Versandstückstapel 10, 20 und 30 zur Verfügung steht, während der die Drehbühne 82 unmittelbar umgebende Raum beinahe vollständig durch die Übergabeeinrichtungen 14, 24 und 34 eingenommen wird. So kann ein sehr kompakter Aufbau der erfindungsgemäßen Vorrichtung erreicht werden.

Während des Betriebs der erfindungsgemäßen Vorrichtung werden die Versandstücke 5 mit der entsprechenden Zuführeinrichtung 12, 22 bzw. 32 nacheinander von dem jeweiligen Versandstückstapel 10, 20 bzw. 30 abgezogen und der zugehörigen Übergabeeinrichtung 14, 24 bzw. 34 zugeführt. Dabei wird ihre Versandadresse mit der entsprechenden Leseeinrichtung 13, 23 bzw. 33 gelesen. Auf Grundlage der so erhaltenen Adresseninformation wird in der Steuereinrichtung unter den den Übergabeeinrichtungen 14, 24 und 34 zugeführten Versandstücken dasjenige ermittelt, dessen Versandadresse unter den zur Übergabe an die Wähleinrichtung in den Übergabeeinrichtungen 14, 24 und 34 bereitstehenden Versandstücken bezüglich der vorgegebenen Reihenfolge die erste Position einnimmt. Im Anschluß daran wird die Drehbühne 82 von der Steuereinrichtung so betätigt, daß die darauf angebrachten Förderbänder 84 und 86 mit den Förderbändern fluchten, zwischen denen das so ermittelte Versandstück aufgenommen ist. Das bedeutet, daß die Drehbühne 82 aus der in Fig. 1 dargestellten Richtung um 45° in Gegenuhrzeigerrichtung um die feste Achse gedreht wird, wenn das zwischen den Förderbändern 16 und 18 der Übergabeeinrichtung 14 aufgenommene Versandstück unter den zur Übergabe bereitstehenden Versandstücken bezüglich der vorgegebenen Reihenfolge die erste Position einnimmt, die Drehbühne in der in Fig. 1 dargestellten Übernahmestellung verbleibt, wenn das zwischen den Förderbändern 26 und 28 der Übergabeeinrichtung 24 aufgenommene Versandstück als nächstes zu übergeben ist, und um 45° in Uhrzeigerrichtung um die feste Achse gedreht wird, wenn das zwischen den Förderbändern 36 und 38 der Übergabeeinrichtung 34 aufgenommene Versandstück von der Steuereinrichtung als das als nächstes zu übergebende Versandstück ermittelt wurde.

Nach Erreichen der Übergabestellung werden die Förderbänder der entsprechenden Übergabeeinrichtung und die Förderbänder 84 und 86 der Wähleinrichtung zum Transportieren des gewählten Versandstückes und Übernehmen desselben zwischen den Förderbändern 84 und 86 der Wähleinrichtung betätigt. Im Anschluß daran wird die Drehbühne in die in Fig. 1 dargestellte Abgabestellung überführt, in der das zwischen den Förderbändern 84 und 86 aufgenommene Versandstück an die Abtransporteinrichtung 90 übergeben werden kann. Dazu werden die Förderbänder 84 und 86 und parallel zueinander verlaufende Förderbänder 92 und 94 der Abtransporteinrichtung zum Transport des von der Wähleinrichtung übernommenen Versandstücks in der durch den Pfeil 91 bezeichneten Richtung betätigt.

Nach der Übernahme eines Versandstückes durch die Wähleinrichtung 80 wird die der Übergabeeinrichtung, von der das Versandstück übernommen wurde, zugeordnete Zuführeinrichtung zur Zuführung des nächsten Versandstückes des entsprechenden Versandstückstapels an die zugehörige Übergabeeinrichtung betätigt, so daß der soeben beschriebene Vorgang nach Abgabe des von der Wähleinrichtung übernommenen Versandstückes zur Fortsetzung des Sortiervorganges wiederholt werden kann. Auf diese Weise können die Sortiergutstücke der Versandstückstapel, in denen die Versandstücke bereits entsprechend der vorgegebenen Reihenfolge geordnet sind, in eine einzige, gemäß der vorgegebenen Reihenfolge geordnete Reihe überführt werden.

Zur Ermöglichung des Abtransports der in der durch den Pfeil 91 bezeichneten Richtung an die Abtransporteinrichtung 90 abgegebenen Versandstücke in einer quer zu dieser Richtung verlaufenden Richtung ist das Förderband 94 der Abtransporteinrichtung 90 kürzer als das Förderband 92 ausgebildet. Wie der Fig. 1 zu entnehmen ist, verläuft auch der Förderweg zwischen den Förderbändern 92 und 94 in radialer Richtung bezüglich der durch das Zentrum der Drehbühne 82 verlaufenden festen Drehachse.

Die zum Betrieb der in Fig. 1 dargestellten Vorrichtung benutzte Steuereinrichtung ist so ausgelegt, daß auf Grundlage der mit den Leseeinrichtungen 13, 23 und 33 gelesenen Versandadressen vor der Übergabe der Versandstücke an die Wähleinrichtung 80 auch noch die Richtigkeit der Reihenfolge der Versandstücke in den einzelnen Versandstückstapeln 10, 20 und 30 überwacht werden kann. Dazu speichert die Steuereinrichtung die Versandadresse des jeweils vor der Zuführung eines neuen Versandstückes an die entsprechende Übergabeeinrichtung von der Wähleinrichtung 80 übernommenen Versandstücks und vergleicht deren Position bezüglich der vorgegebenen Reihenfolge mit der Position der Adresse des zugeführten Versandstückes bezüglich dieser Reihenfolge.

Wie der Fig. 1 zu entnehmen ist, verlaufen nicht nur die Hauptflächen der die Zuführeinrichtung bildenden Förderbänder 12, 22 und 32 in Vertikalebenen, sondern auch die Hauptflächen aller anderen Förderbänder der dargestellten Vorrichtung. Zum Betreiben der in Fig. 1 dargestellten Vorrichtung reicht es aus, wenn die Förderbänder 84 und 86 der Wähleinrichtung 80 zum Transportieren von Versandstücken in nur einer Richtung ausgelegt sind. Mit dieser einfachen Anordnung der Förderbänder 84 und 86 können sämtliche Versandstücke der Versandstückstapel 10, 20 und 30, deren Versandadressen zur Ermöglichung des Lesens davon mit den Leseeinrichtungen 13, 23 und 33 jeweils in dieselbe Richtung weisen, so an die Abtransporteinrichtung 90 vergeben werden, daß ihre Versandadressen in Richtung auf das Förderband 94 weisen, so daß sie bei der Abnahme vom längeren Förderband 92 einfach gelesen werden können.

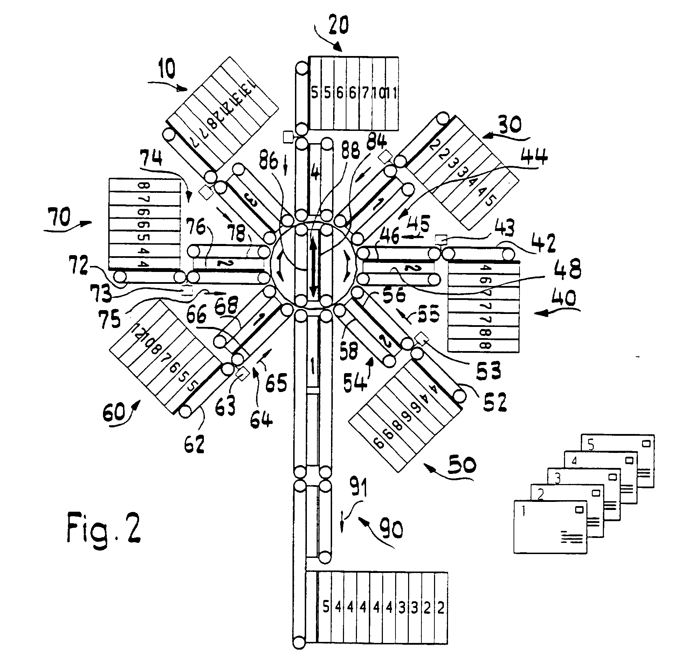

Die in Fig. 2 dargestellte Vorrichtung weist dieselben Bauteile auf wie die in Fig. 1 dargestellte Vorrichtung. Diese Bauteile sind in Fig. 2 jedoch zur Verbesserung der Übersichtlichkeit nicht mit Bezugszeichen versehen. Darüber hinaus weist die Vorrichtung gemäß Fig. 2 auch noch weitere Zuführeinrichtungen 42, 52, 62 und 72, Leseeinrichtungen 43, 53, 63 und 73 sowie Übergabeeinrichtungen 44, 54, 64, 74 mit jeweils zwei parallel zueinander verlaufenden Förderbändern 46 und 48, 56 und 58, 66 und 68 bzw. 76 und 78 auf, um die Überführung von Versandstücken von insgesamt sieben Versandstückstapeln 10, 20, 30, 40, 50, 60 und 70, in denen die Versandstücke entsprechend einer vorgegebenen Reihenfolge geordnet sind, in eine einzige entsprechend dieser Reihenfolge geordnete Reihe zu ermöglichen. Die Funktion der in Fig. 2 dargestellten Vorrichtung entspricht im wesentlichen derjenigen der in Fig. 1 dargestellten Vorrichtung. Bei dieser Vorrichtung sind die Förderbänder 84 und 86 der Wähleinrichtung 80 jedoch so ausgelegt, daß die Versandstücke dazwischen in zwei einander entgegengesetzten Richtungen transportiert werden können, wie durch den Doppelpfeil 88 dargestellt. Dadurch kann der Drehwinkel der zur Übernahme und Abgabe der Versandstücke erforderlichen Drehbewegung der Drehbühne 82 deutlich verringert werden.

Die Erfindung ist nicht auf die anhand der Zeichnung erläuterten Ausführungsformen beschränkt. Beispielsweise ist auch daran gedacht, eine erfindungsgemäße Vorrichtung zum Überführen von in Form von nur zwei Teilreihen zugeführten Versandstücken auszulegen. Ferner können die Übergabeeinrichtungen auch parallel zueinander angeordnet werden, wenn die Wähleinrichtung zur Übernahme und Abgabe von Versandstücken längs einer im wesentlichen geradlinig verlaufenden Strecke bewegbar ist. Schließlich können anstelle der Förderbänder auch Klammergreifer zum Transportieren der Versandstücke verwendet werden.

## Patentansprüche

1. Vorrichtung zum Überführen von Adressen aufweisenden Sortiergutstücken (5) in eine entsprechend einer vorgegebenen Reihenfolge möglicher Adressen geordnete Reihe, ausgehend von mindesten zwei Teilreihen (10,20,30), in denen die Sortiergutstücke (5) gemäss der vorgegebenen Reihenfolge geordnet sind, die eine betätigbare Wähleinrichtung aufweist und entsprechend der Anzahl der Teilreihen (10,20,30)
• je eine Zuführeinrichtung (12,22,32) zur Zuführung der Sortiergutstücke (5) der jeweiligen Teilreihe (10,20,30),
• je eine die Adressen der zu übergebenden Sortiergutstücke (5) erfassende Einrichtung (13,23,33),
• je eine betätigbare Übergabeeinrichtung (14,24,34), zum sequentiellen Übergeben der Sortiergutstücke (5) von der jeweiligen Zuführeinrichtung (12,22,32) an die Wähleinrichtung (80) aufweist, sowie
eine allen Sortiergutstücken (5) gemeinsame Abgabestelle (90) und eine die Adressen der zu übergebenden Sortierstücke (5) erfassende und die Wähleinrichtung (80) zur Übernahme und Abgabe der Sortierstücke (5) aller Teilreihen (10, 20, 30) gemäß der vorgegebenen Reihenfolge betätigende Steuereinrichtung vorgesehen sind,
**dadurch gekennzeichnet, dass**
die Wähleinrichtung (80) um eine feste Achse drehbar ist und die Übergabeeinrichtungen (14,24,34) längs eines Kreises um die feste Achse der Wähleinrichtung angeordnet sind.

2. Vorrichtung nach Anspruch 1,
**dadurch gekennzeichnet, dass**
die Wähleinrichtung (80) zwischen den Übernahmestellungen, in denen sie zum selektiven Übernehmen von Sortiergutstücken (5) von jeweils einer der Übergabeeinrichtungen (14,24,34) betätigbar ist, und einer zum Abgeben der übernommenen Sortiergutstücke (5) an der gemeinsamen Abgabestelle dienenden Abgabestellung bewegbar ist.

3. Vorrichtung nach Anspruch 2,
**dadurch gekennzeichnet, dass**
dass eine der Übernahmestellungen der Abgabestellung entspricht.

4. Vorrichtung nach einem der vorhergehenden Ansprüche,
**dadurch gekennzeichnet, dass**
die Wähleinrichtung (80) ein zum Transportieren der Sortiergutstücke (5) von den Übergabeeinrichtungen (14,24,34) zur Abgabestelle betätigbares Förderelement (84,86) aufweist.

5. Vorrichtung nach einem der vorhergehenden Ansprüche,
**dadurch gekennzeichnet, dass**
mindestens eine der Übergabeeinrichtungen (14,24,34) ein zum sequenziellen Übergeben der Sortiergutstücke (5) an die Wähleinrichtung (80) betätigbares Förderelement (16,18,26,28,36,38) aufweist.

6. Vorrichtung nach einem der vorhergehenden Ansprüche,
**dadurch gekennzeichnet, dass**
an der Abgabestelle ein zum Abtransport der dort abgegebenen Sortiergutstücke betätigbares Förderelement (90) angeordnet ist.

7. Vorrichtung nach einem der Ansprüche 3 bis 5,
**dadurch gekennzeichnet, dass**
mindestens eines der Förderelemente zwei parallel zueinander verlaufende, zum Transportieren der Sortiergutstücke (5) dazwischen betreibbare Förderbänder (16,18,26,28,36,38) aufweist.

8. Vorrichtung nach Anspruch 7,
**dadurch gekennzeichnet, dass**
mindestens eines der Förderbänder (16,18,26,28,36,38) gegen die Wirkung einer Vorspannkraft senkrecht zu seiner Förderrichtung verschiebbar ist.

9. Vorrichtung nach Anspruch 7 oder 8,
**dadurch gekennzeichnet, dass**
die Hauptflächen der Förderbänder (16,18,26,28,36,38)in Vertikalebenen angeordnet sind.

10. Vorrichtung nach einem der vorhergehenden Ansprüche,
**dadurch gekennzeichnet, dass**
mindestens einer der Übergabeeinrichtungen (14,24,34) eine zuführeinrichtung (12,22,32) zugeordnet ist, mit der die Sortiergutstücke einer in Form eines Sortiergutstückstapels (10,20,30) vorliegenden Teilreihe nacheinander von dem Sortiergutstückstapel (10,20,30) abgezogen und der Übergabeeinrichtung (14,24,34) zugeführt werden.

11. Vorrichtung nach einem der vorhergehenden Ansprüche,
**dadurch gekennzeichnet, dass**
mindestens einer der Übergabeeinrichtungen (14,24,34) eine Leseeinrichtung (13,23,33) zum automatischen Lesen der Adressen der davon zu übergebenden Sortiergutstücke (5) zugeordnet ist.

12. Vorrichtung nach Anspruch 10 oder 11,
**dadurch gekennzeichnet, dass**
die Leseeinrichtung (13,23,33) zwischen der zuführeinrichtung (12,22,32) und der Übergabeeinrichtung (14,24,34) angeordnet ist.

13. Vorrichtung nach Anspruch 11 oder 12,
**dadurch gekennzeichnet, dass**
die Steuereinrichtung zum Vergleichen der Reihenfolge der mit der einer der Übergabeeinrichtungen (14,24,34) zugeordneten Leseeinrichtung (13,23,33) gelesenen Adressen mit der vorgegebenen Reihenfolge betreibbar ist.

14. Vorrichtung nach einem der vorhergehenden Ansprüche,
**dadurch gekennzeichnet, dass**
die Wähleinrichtung (80) zum Abgeben der übernommenen Sortiergutstücke (5) aller Teilreihen (10,20,30) mit in derselben Richtung weisenden Adressen betreibbar ist.

15. Verfahren zum Überführen von Adressen aufweisenden Sortiergutstücken (5) in eine entsprechend einer vorgegebenen Reihenfolge möglicher Adressen geordnete Reihe, ausgehend von mindesten zwei Teilreihen (10,20,30), in denen die Sortiergutstücke (5) gemäss der vorgegebenen Reihenfolge geordnet sind, das folgende Verfahrensschritte aufweist:
A: die Sortiergutstücke (5) der jeweiligen Teilreihe (10,20,30) werden einzeln von einer der Anzahl der Teilreihen entsprechenden Anzahl von zuführeinrichtungen (12,22,32) aufgenommen und in Richtung einer der Anzahl der Teilreihen entsprechenden Anzahl betätigbaren Übergabeeinrichtungen (14,24,34) transportiert;
B: die Adressen der zu übergebenden Sortiergutstücke (5) werden von einer der Anzahl der Teilreihen entsprechenden Anzahl von Leseeinrichtung (13,23,33) erfasst;
C: die Reihenfolge der Adressen der mit einer der Übergabeeinrichtung zu übergebenden Sortiergutstücke (5) wird vor Übergabe an eine Wähleinrichtung (80) mit der vorgegebenen Reihenfolge verglichen;
D: die Wähleinrichtung (80) wird in Abhängigkeit von den Adressen der zu übergebenden Sortiergutstücke (5) zur Übergabe und Abgabe der Sortiergutstücke (5) aller Teilreihen (10,20,30) gemäss der vorgegebenen Reihenfolge gedreht und dabei an die längs eines Kreises um die feste Achse der Wähleinrichtung angeordnete Übergabeeinrichtung bewegt, von der das nächste Sortiergutstück abgegeben werden soll.
E: das Sortiergutstück (5) wird von der, gemäss von der Steuerung ermittelten Übergabeeinrichtung (14,24,34) an die Wähleinrichtung (80) übergeben;
F: die Wähleinrichtung (80) wird entsprechend zur Abgabe des Sortiergutstückes (5) an die Abgabestelle gedreht.

16. Verfahren nach Anspruch 15,
**dadurch gekennzeichnet, dass**
die Wähleinrichtung (80) nur zur Übernahme eines Sortiergutstücks (5) angesteuert wird, wenn in jeder Sortiergutstücke (5) übergebenden Übergabeeinrichtung (14,24,34) ein Sortiergutstück (5) zur Übergabe daran bereitsteht.

17. Verwendung einer Vorrichtung nach einem der Ansprüche 1 bis 14 zum Überführen von mit Versandadressen versehenen Versandstücken in eine gemäss einer vorgegebenen Reihenfolge möglicher Versandadressen geordnete Reihe.

## Claims

1. Device for conveying addressed items to be sorted (5) in a row arranged corresponding to a predetermined sequence of possible addresses, starting from at least two sub-rows (10, 20, 30) in which the items to be sorted (5) are arranged in accordance with the predetermined sequence, that has a controllable selector device and corresponding to the number of sub-rows (10, 20, 30) has
• a feed device each (12, 22, 32) for feeding the items to be sorted (5) of the particular sub-row (10, 20, 30),
• a device (13, 23, 33) each for reading the addresses of the items to be sorted (5) to be conveyed,
• a controllable transfer device (14, 24, 34) for sequential transfer of the items to be sorted (5) from the particular feed device (12, 22, 32) to the selector device (80) and
a discharge point (90) common to all items to be sorted (5) and a control device for reading the addresses of the items to be sorted (5) to be transferred, and the selector device (80) for extraction and discharge of the items to be sorted (5) of all sub-rows (10, 20, 30) in accordance with the predetermined sequence, **characterised in that** the selector device (80) can rotate around a fixed axis and the transfer devices (14, 24, 34) are arranged along a circle about the fixed axis of the selector device.

2. Device according to Claim 1, **characterised in that** the selector device (80) can be moved between the transfer points in which it can be controlled for the selective extraction of items to be sorted (5) from one of the transfer devices (14, 24, 34) in each case, and a discharge point serving to discharge the extracted items to be sorted (5) at the common discharge point.

3. Device according to Claim 2, **characterised in that** one of the extraction points corresponds to the discharge point.

4. Device according to one of the preceding claims, **characterised in that** the selector device (80) has a controllable conveyor element (84, 86) for transporting the items to be sorted (5) from the transfer devices (14, 24, 34) to the discharge point.

5. Device according to one of the preceding claims, **characterised in that** at least one of the transfer devices (14, 24, 34) has a controllable conveyor element (16, 18, 26, 28, 36, 38) for the sequential conveyance of items to be sorted (5) to the selector device (80).

6. Device according to one of the preceding claims, **characterised in that** a controllable conveyor element (90) is arranged at the discharge point to remove the items to be sorted discharged at the point.

7. Device according to one of Claims 3 to 5, **characterised in that** at least one of the conveyor elements has two operable conveyor belts (16, 18, 26, 28, 36, 38) running parallel to each other, for transporting the items to be sorted (5) between them.

8. Device according to Claim 7, **characterised in that** at least one of the conveyor belts (16, 18, 26, 28, 36, 38) can be shifted perpendicularly relative to its direction of conveyance against the effect of a preload force.

9. Device according to Claim 7 or 8, **characterised in that** the main surfaces of the conveyor belts (16, 18, 26, 28, 36, 38) are arranged in vertical planes.

10. Device according to one of the preceding claims, **characterised in that** a feed device (12, 22, 32) is allocated to at least one of the transfer devices (14, 24, 34), by means of which the items to be sorted of a sub-row present in the form of a sort mail stack (10, 20, 30) are extracted in turn from the item to be sorted stack (10, 20, 30) and fed to the transfer device (14, 24, 34).

11. Device according to one of the preceding claims, **characterised in that** a reading device (13, 23, 33) is allocated to at least one of the transfer devices (14, 24, 34), for automatic reading of the addresses of the items to be sorted (5) to be transferred from it.

12. Device according to Claim 10 or 11, **characterised in that** the reading device (13, 23, 33) is arranged between the feed device (12, 22, 32) and the transfer device (14, 24, 34).

13. Device according to Claim 11 or 12, **characterised in that** the control device for comparing the sequence of the addresses read by the reading device (13, 23, 33) allocated to one of the transfer devices (14, 24, 34) can be operated using the predetermined sequence.

14. Device according to one of the preceding claims, **characterised in that** the selector device (80) for discharging the extracted items to be sorted (5) of all sub-rows (10, 20, 30) can be operated with addresses pointing in the same direction.

15. Device for conveying addressed items to be sorted (5) in a row arranged in accordance with a predetermined sequence of possible addresses, starting from at least two sub-rows (10, 20, 30) in which the items to be sorted (5) are arranged in accordance with the predetermined sequence, that has the following process steps.
A The items to be sorted (5) of the particular sub-row (10, 20, 30) are individually extracted from one of the number of feed devices (12, 22, 32) corresponding to one of the number of sub-rows and transported in the direction of one of the number of controllable transfer devices (14, 24, 34) corresponding to one of the number of sub-rows;
B The addresses of the items to be sorted (5) to be transferred are read by one of a number of reading devices (13, 23, 33) corresponding to one of the number of sub-rows;
C The sequence of addresses of the items to be sorted (5) to be transferred by one of the transfer devices is compared with the predetermined sequence before transfer to a selector device (80);
D The selector device (80) is rotated relative to addresses of the items to be sorted (5) to be transferred, to ensure the extraction and discharge of the items to be sorted (5) of all the sub-rows (10, 20, 30) in accordance with the predetermined sequence, and in doing so is moved to the transfer device, arranged along a circle about the fixed axis of the selector device, to the transfer device from which the next mail sort item is to be discharged;
E The item to be sorted (5) is transferred to the selector device (80) by the transfer device (14, 24, 34) determined by the controller;
F The selector device (80) is appropriately rotated corresponding to the discharge of the item to be sorted (5) to the discharge point.

16. Method according to Claim 15, **characterised in that** the selector device (80) is activated to extract a item to be sorted (5) only if a item to be sorted (5) is present ready for transfer in each transfer device (14, 24, 34) transferring items to be sorted (5).

17. Use of a device according to one of Claims 1 to 14 for conveying addressed mail items in a row arranged in accordance with a predetermined sequence of possible mailing addresses.

## Revendications

1. Dispositif de transfert d'articles (5) à trier ayant des adresses en une rangée ordonnée d'après une succession prescrite d'adresses possibles, à partir d'au moins deux rangées (10, 20, 30) partielles dans lesquelles les articles (5) sont ordonnés d'après la succession prescrite, comportant un équipement de sélection pouvant être actionné et, en fonction du nombre de rangées (10, 20, 30) partielles,
- un équipement (12, 22, 32) respectif d'alimentation pour apporter les articles (5) de la rangée (10, 20, 30) partielle respective,
- un équipement (13, 23, 33) enregistrant les adresses des articles (5) à transférer,
- un équipement (14, 24, 34) respectif de transfert pouvant être actionné pour le transfert séquentiel des articles (5) de l'équipement (12, 22, 32) respectif d'alimentation à l'équipement (80) de sélection,
et un poste (90) de délivrance commun étant prévu pour tous les articles (5), ainsi qu'un équipement de commande enregistrant les adresses des articles (5) à transférer et actionnant l'équipement (80) de sélection pour prendre en charge et délivrer dans la succession prescrite les articles (5) de toutes les rangées (10, 20, 30) partielles,
**caractérisé en ce que** l'équipement (80) de sélection est rotatif autour d'un axe fixe et les équipements (14, 24, 34) de transfert sont disposés le long d'un cercle autour de l'axe fixe de l'équipement de sélection.

2. Dispositif suivant la revendication 1, **caractérisé en ce que** l'équipement (80) de sélection peut être déplacé entre les positions de prise en charge, dans lesquelles il peut être actionné pour la prise en charge sélective d'articles (5) à partir d'un équipement (14, 24, 34) respectif de transfert, et une position de délivrance servant à délivrer au poste de délivrance commun les articles (5) pris en charge.

3. Dispositif suivant la revendication 2, **caractérisé en ce qu'**une des positions de prise en charge correspond à la position de délivrance.

4. Dispositif suivant l'une des revendications précédentes, **caractérisé en ce que** l'équipement (80) de sélection comporte un élément (84, 86) de convoyage pouvant être actionné pour transporter les articles (5) depuis les équipements (14, 24, 34) de transfert jusqu'au poste de délivrance.

5. Dispositif suivant l'une des revendications précédentes, **caractérisé en ce qu'**au moins un des équipements (14, 24, 34) de transfert comporte un élément (16, 18, 26, 28, 36, 38) de convoyage pouvant être actionné pour le transfert séquentiel des articles (5) à l'équipement (80) de sélection.

6. Dispositif suivant l'une des revendications précédentes, **caractérisé en ce qu'**un élément (90) de convoyage est disposé au poste de délivrance, élément qui peut être actionné pour le transport d'évacuation des articles qui y sont délivrés.

7. Dispositif suivant l'une des revendications 3 à 5, **caractérisé en ce qu'**au moins un des éléments de convoyage comporte deux bandes (16, 18, 26, 28, 36, 38) transporteuses s'étendant parallèlement entre elles, pouvant être actionnées pour transporter entre elles les articles (5).

8. Dispositif suivant la revendication 7, **caractérisé en ce qu'**au moins une des bandes (16, 18, 26, 28, 36, 38) transporteuses peut être déplacée en translation perpendiculairement à sa direction de transport, contre l'action d'une force de précontrainte.

9. Dispositif suivant la revendication 7 ou 8, **caractérisé en ce que** les faces principales des bandes (16, 18, 26, 28, 36, 38) transporteuses sont disposées dans des plans verticaux.

10. Dispositif suivant l'une des revendications précédentes,
**caractérisé en ce qu'**un équipement (12, 22, 32) d'alimentation est associé à au moins un des équipements (14, 24, 34) de transfert, par lequel les articles d'une rangée partielle présente sous la forme d'une pile (10, 20, 30) d'articles sont successivement retirés de la pile (10, 20, 30) d'articles et apportés à l'équipement (14, 24, 34) de transfert.

11. Dispositif suivant l'une des revendications précédentes, **caractérisé en ce qu'**un équipement (13, 23, 33) de lecture est associé à au moins un des équipements (14, 24, 34) de transfert, pour la lecture automatique des adresses des articles (5) à transférer par cet équipement de transfert.

12. Dispositif suivant la revendication 10 ou 11, **caractérisé en ce que** l'équipement (13, 23, 33) de lecture est disposé entre l'équipement (12, 22, 32) d'alimentation et l'équipement (14, 24, 34) de transfert.

13. Dispositif suivant la revendication 11 ou 12, **caractérisé en ce que** l'équipement de commande peut être actionné pour comparer avec la succession prescrite la succession des adresses lues par l'équipement (13, 23, 33) de lecture associé à un des équipements (14, 24, 34) de transfert.

14. Dispositif suivant l'une des revendications précédentes, **caractérisé en ce que** l'équipement (80) de sélection peut être actionné pour délivrer les articles (5) pris en charge de toutes les rangées (10, 20, 30) partielles avec les adresses tournées dans la même direction.

15. Procédé de transfert d'articles (5) à trier ayant des adresses en une rangée ordonnée d'après une succession prescrite d'adresses possibles, à partir d'au moins deux rangées (10, 20, 30) partielles dans lesquelles les articles (5) sont ordonnés d'après la succession prescrite, comprenant les étapes suivantes :
A: les articles (5) de la rangée (10, 20, 30) partielle respective sont pris en charge individuellement par un nombre d'équipements (12, 22, 32) d'alimentation correspondant au nombre de rangées partielles, et sont transportés en direction d'un équipement de transfert parmi le nombre d'équipements (14, 24, 34) de transfert pouvant être actionnés correspondant au nombre de rangées partielles ;
B: les adresses des articles (5) à transférer sont enregistrées par un équipement de lecture parmi le nombre d'équipements (13, 23, 33) de lecture correspondant au nombre de rangées partielles ;
C: la succession des adresses des articles (5) à transférer avec un des équipements de transfert est comparée avec la succession prescrite avant le transfert à un équipement (80) de sélection ;
D: l'équipement (80) de sélection est, en fonction des adresses des articles (5) à transférer, tourné pour transférer et délivrer les articles (5) de toutes les rangées (10, 20, 30) partielles d'après la succession prescrite, en étant alors amené devant l'équipement de transfert, parmi les équipements de transfert disposés le long d'un cercle autour de l'axe fixe de l'équipement de sélection, à partir duquel l'article suivant doit être délivré ;
E: l'article (5) est transféré à l'équipement (80) de sélection à partir de l'équipement (14, 24, 34) de transfert déterminé par l'équipement de commande ;
F: l'équipement (80) de sélection est tourné de la manière appropriée pour délivrer l'article (5) au poste de délivrance.

16. Procédé suivant la revendication 15, **caractérisé en ce que** l'équipement (80) de sélection est commandé pour prendre en charge un article (5) seulement si, dans chaque équipement (14, 24, 34) de transfert transférant des articles (5), un article (5) est disponible pour le transfert à l'équipement de sélection.

17. Utilisation d'un dispositif suivant l'une des revendications 1 à 14 pour transférer des articles postaux ayant des adresses d'expédition en une rangée ordonnée d'après une succession prescrite d'adresses d'expédition possibles.
